Europäisches Patentamt

European Patent Office

Office européen des brevets

(19)

(11) **EP 0 645 404 B1**

(12) **EUROPÄISCHE PATENTSCHRIFT**

(45) Veröffentlichungstag und Bekanntmachung des Hinweises auf die Patenterteilung:
**11.12.1996 Patentblatt 1996/50**

(51) Int Cl.[6]: **C08F 214/26**

(21) Anmeldenummer: **94114674.8**

(22) Anmeldetag: **17.09.1994**

(54) **Verfahren zur Herstellung eines modifizierten Polytetrafluorethylens und seine Verwendung**

Process for preparing a modified polytetrafluoroethylene and use thereof

Procédé de préparation d'un polytétrafluoréthylène modifié et son utilisation

(84) Benannte Vertragsstaaten:
**BE CH DE FR GB IT LI NL SE**

(30) Priorität: **25.09.1993 DE 4332712**

(43) Veröffentlichungstag der Anmeldung:
**29.03.1995 Patentblatt 1995/13**

(73) Patentinhaber: **Dyneon GmbH**
**84504 Burgkirchen (DE)**

(72) Erfinder:
• **Felix, Bernd, Dr.**
  **D-84508 Burgkirchen (DE)**
• **Hintzer, Klaus, Dr.**
  **D-84556 Kastl (DE)**
• **Löhr, Gernot, Dr.**
  **D-84508 Burgkirchen (DE)**
• **Schöttle, Thomas, Dr.**
  **D-84547 Emmerting (DE)**

(56) Entgegenhaltungen:
**EP-A- 0 239 192**      **EP-A- 0 296 559**
**US-A- 4 078 134**

**Beschreibung**

Die Erfindung betrifft ein Suspensionspolymerisations-Verfahren zur Herstellung eines modifizierten Polytetrafluorethylens (PTFE), das bei der Verarbeitung von daraus hergestellten großen Formteilen nach der Vorform-Sintertechnik keine Verfärbung erleidet. "Modifiziertes" PTFE heißt, daß das Tetrafluorethylen-(TFE)-Polymere geringe Anteile an "modifizierenden" Comonomeren enthält, wobei aber die Copolymeren - wie das homopolymere PTFE - nicht aus der Schmelze verarbeitbar sind.

Formpulver aus einem Polytetrafluorethylen mit einem geringen Gehalt an einem Perfluoralkylvinylether mit einer Alkylgruppe bis zu 5 Kohlenstoffatomen sind in zwei Formen bekannt, beispielsweise aus der US-A 3 855 191 in nicht rieselfähiger Form und aus der US-A 4 078 134 in rieselfähiger Form. Die rieselfähige Form bietet Vorteile bei der Dosierung und Beschickung der Verarbeitungsmaschinen, die Formteile aus nicht rieselfähiger Ware zeigen aber - wie auch beim unmodifizierten PTFE - deutlich bessere mechanische und elektrische Eigenschaften.

Durch die Modifizierung mit dem Perfluoralkylvinylether wird die Kristallisationsneigung aus der Schmelze gehemmt, wodurch der Amorphanteil erhöht wird. Dadurch können die guten mechanischen Eigenschaften wie Reißfestigkeit und Reißdehnung schon bei deutlich niedrigeren Molgewichten als bei unmodifiziertem Polytetrafluorethylen erreicht werden.

Die niedrigeren Molgewichte der modifizierten Produkte zeigen sich in einer Schmelzviskosität nach Ajroldi (US-A 3 855 191, Spalte 8) von etwa 1 bis 100 GPas, während die unmodifizierten Polymeren mehr als 300 GPas bei vergleichbaren guten mechanischen Eigenschaften aufweisen.

Durch diese drastische Herabsetzung der Schmelzviskosität werden die Eigenschaften der aus diesen modifizierten Formpulvern hergestellten Formteile verbessert. Da die Teilchen des Formpulvers leichter verschmelzen, enthalten die Formteile weniger Poren und dadurch eine verbesserte elektrische Durchschlagsfestigkeit, außerdem wird die Kriechfestigkeit nahezu verdoppelt. Vor allem aber wird die Verschweißbarkeit der Formteile erheblich verbessert.

Allerdings zeigen die Formteile bei der Sinterverarbeitung, und hier vor allem bei größeren Formteilen, häufig eine erhebliche Verfärbung, insbesondere beim Einsatz von nicht rieselfähigen Formpulvern. Diese ist meist nicht homogen über das Formteil verteilt, sondern es treten in der Regel braune Schlieren auf. Da derartige Kunststoffe nur für hochwertige Waren eingesetzt werden, ist dieser inhomogene Aspekt äußerst unerwünscht, auch wenn dadurch die technischen Eigenschaften nicht merklich beeinträchtigt werden.

Derartige Verfärbungen wurden auch schon bei nicht modifiziertem PTFE festgestellt und auf eine Verunreinigung durch Metallionen infolge einer Korrosion der Edelstahl-Polymerisationsgefäße zurückgeführt (US-A 3 629 219, Spalte 3, Zeile 7 ff.). Zur Abhilfe wird dort die Zugabe von Puffern zur Abpufferung korrosiver Säuren empfohlen.

Dieser Effekt kann jedoch bei den durch Perfluoralkylvinylethern modifizierten Polymeren nicht allein ausschlaggebend sein, da auch beim Einsatz solcher Puffer sowie bei der Polymerisation in Emaillegefäßen die genannten Verfärbungen bei der Hitzebehandlung der aus den so erhaltenen Polymerisaten hergestellten Formteile auftreten.

Es wurde nun gefunden, daß diese nachteilige Verfärbung dann nicht auftritt, wenn man bei der Polymerisation den Einsatz von Ammoniumverbindungen weitgehend oder vorzugsweise völlig vermeidet. Dieser Befund ist außerordentlich überraschend, da Ammoniumverbindungen aufgrund ihrer guten Löslichkeit ganz allgemein als Initiatoren, Aktivatoren, Dispergiermittel und Puffer eingesetzt werden. So wird in der US-A 3 629 219 in Spalte 3, Zeilen 31 bis 37 ausdrücklich empfohlen, Ammoniumpuffer, -initiatoren und -aktivatoren einzusetzen, um die Verfärbung des gesinterten Produktes zu vermeiden.

Es wurde weiterhin gefunden, daß die im technischen Maßstab in üblicher Weise unter Einsatz von Ammoniumverbindungen hergestellten modifizierten Polymeren auch durch ausgiebiges Waschen nicht ausreichend und zuverlässig von den anhaftenden Ammoniumverbindungen befreit werden. Oft führt sogar intensives Waschen der Produkte zu einer Zunahme der braunen Schlieren. Dieser Effekt ist vermutlich darauf zurückzuführen, daß die restliche Menge an Puffer vor der Restmenge der Monomeren entfernt wird. Bei der Oxidation dieser restlichen Monomeren entstehen starke Säuren, beispielsweise aus Perfluorpropylvinylether die Perfluorpropionsäure, die Metalloberflächen der Aufbereitungsanlagenteile korrodieren und so Metallionen einschleppen können. In diesem Falle wären die Verfärbungen dann - wie in der US-A 3 629 219 beschrieben - auf die Metallkontamination zurückzuführen.

Erfindungsgemäß wird deshalb die Suspensionspolymerisation in an sich bekannter Weise durchgeführt, wobei aber die Polymerisationshilfsstoffe im wesentlichen nicht in Form von Ammoniumsalzen und als Initiatoren Erdalkalioder Alkalipersulfate eingesetzt werden. "Im wesentlichen" besagt, daß mindestens etwa 80 %, vorzugsweise mindestens etwa 90 %, der Kationen der zugesetzten Chemikalien nicht Ammoniumionen sind. Vorteilhaft werden Ammoniumverbindungen völlig vermieden.

Im folgenden werden bevorzugte Ausführungsformen des erfindungsgemäßen Verfahrens näher erläutert.

Die Polymerisation erfolgt nach dem bekannten Suspensionsverfahren bei Temperaturen von 60 bis 130 °C, vorzugsweise 60 bis 80 °C, und bei Tetrafluorethylen-Drücken von etwa 4 bis etwa 25 bar, vorzugsweise von 5 bis 15 bar. Der Perfluoralkylvinylether, vorzugsweise Perfluor-n-propylvinylether (PPVE), wird in einer solchen Menge zudosiert, daß das Polymerisat 0,01 bis 1 Gew.-%, vorzugsweise 0,02 bis 0,25 Gew.-%, Ethermonomereinheiten enthält.

Als Initiatoren kommen Persulfate in Betracht, wobei grundsätzlich die Erdalkalisalze möglich sind. Aufgrund der besseren Löslichkeit werden jedoch die Lithium-, Natrium- und Kaliumsalze bevorzugt.

Als Puffer sind Substanzen bevorzugt, die nicht stark alkalisch sind, da diese mitunter zu einer schwachen, wenn auch homogenen Verfärbung führen können. Geeignet sind die Alkalimono- und -diphosphate, Alkaliformiate und -trifluoracetate. Bevorzugt sind die Alkalioxalate und -hydrogenoxalate, insbesondere die Natrium- und Kaliumsalze, die unter den angewandten Bedingungen nicht oxidierend werden.

Der Zusatz eines Puffers ist in vielen Fällen entbehrlich, bringt aber den Vorteil mit sich, daß die Korrosion der Anlagenteile vermindert wird und die pH-abhängige Zerfallsgeschwindigkeit des Initiators konstant bleibt, was zu einer übersichtlichen Polymerisationsdauer und zu einer besseren Kontrolle der Molgewichtsverteilung führt.

Organische Hilfschemikalien wie Zitronensäure oder organische Initiatoren wie Dibernsteinsäureperoxid sind nicht vorteilhaft, da sie bei nicht ausreichender Entfernung zu Verfärbungen des Produkts führen können.

Der Perfluoralkylvinylether wird vorzugsweise so zugeführt, daß im wesentlichen die Einbaurate über die Polymerisationsdauer konstant ist. Es führt aber auch die Vorlage der Gesamtmenge an Ether zu einem Produkt mit guten Eigenschaften.

Bei dem erfindungsgemäßen Verfahren kann vorteilhaft auf die Zugabe eines Dispergierhilfsmittels verzichtet werden. Man vermeidet so das Auftreten von Verklumpungen, durch die die Reaktion unkontrollierbar werden kann.

Die Polymerisation kann auch nach dem aus der US-A 5 153 285 bekannten Verfahren durchgeführt werden, bei dem vor der Polymerisation eine Mischung von TFE und Inertgas aufgepreßt wird und der Gesamtdruck der aufgepreßten Mischung 5 bis 50 bar beträgt, wobei die Konzentration des TFE in dieser Mischung bei 30 bis 70 Mol-% liegt und durch entsprechende Nachspeisung während der Polymerisation in diesem Bereich gehalten wird.

Die vorteilhaften Eigenschaften der erfindungsgemäß erhaltenen Produkte sind aus den folgenden Beispielen ersichtlich. Die Ergebnisse sind in Form einer Tabelle zusammengefaßt, wobei die Beispiele 1 bis 10 die herkömmliche Verfahrensweise zeigen und die Beispiele 11 bis 19 das erfindungsgemäße Verfahren. Die Beispiele enthalten Wiederholungen mit gleichen Versuchsparametern, die zeigen, daß auch mit dem bekannten Verfahren - in Einzelfällen - keine Verfärbung erzielt wird. Es werden Produkte mit einem mittleren PPVE-Gehalt von 0,04 beziehungsweise 0,09 Gew.-% hergestellt (entsprechend üblichen Handelsprodukten).

Der in der Tabelle angegebene PPVE-Einbau wird IR-spektroskopisch durch Messung der Absorption A bei 994 und 2367 cm$^{-1}$ an einer 100 µm dicken Folie nach der folgenden Gleichung bestimmt:

$$PPVE\ (Gew.\text{-}\%) = \frac{A\ 994}{A\ 2367} \times 0,95\ .$$

Die SSG-Dichte wird nach ASTM-Prüfnorm D-1457-69 bestimmt.

In die Tabelle wurden außerdem die Reißfestigkeiten und Reißdehnungen aufgenommen, um zu zeigen, daß der erfindungsgemäße Vorteil nicht durch Nachteile bei diesen Gebrauchseigenschaften erkauft wird. Zur Bestimmung der Reißfestigkeit, Reißdehnung und Braunverfärbung verfährt man wie folgt:

a) Waschen des Rohpolymerisats mit deionisiertem Wasser,
b) Vortrocknen im Wirbelbett bei Temperaturen bis 130 °C,
c) Nachtrocknen über 4 Stunden bei 220 °C,
d) Mahlen in einer Luftstrahlmühle auf einen $d_{50}$-Wert von etwa 20 µm,
e) Verpressen bei 350 bar zu einem zylindrischen, 13 kg schweren Block von je etwa 208 mm Höhe und Durchmesser,
f) Sintern bei 380 °C nach einem Temperaturprogramm,
g) Schälen einer Folie von 100 µm Dicke in 200-µm-Schritten und
h) visuelle Beurteilung der Farbe am verbleibenden Block, der zu 90 % abgeschält wird, nach folgender Skala:

| Note | Verfärbung |
|------|------------------|
| 0 | keine |
| 1 | gerade erkennbar |
| 2 | deutlich sichtbar |
| 3 | teebraun |

Aus der mittleren Zone des Blocks werden Proben der 100 µm dicken Folie zur Bestimmung der Reißfestigkeit und -dehnung nach DIN 53 455 (Streifenmethode) verwendet.

Beispiele

In einen 150-l-Druckbehälter mit Edelstahlauskleidung werden 100 l Wasser und die in der Tabelle angegebene Puffersubstanz eingefüllt. Der Kesselinhalt wird durch mehrmaliges Spülen mit Stickstoff und Evakuieren von Luftsauerstoff befreit und auf die angegebene Reaktionstemperatur gebracht. Die angegebene Menge PPVE wird vorgelegt und TFE auf 10 bar aufgedrückt. Die Reaktion wird durch rasches Einpumpen der wäßrigen Lösung des angegebenen Initiators in Gang gesetzt.

Mit der in der Tabelle angegebenen Geschwindigkeit wird der PPVE kontinuierlich bis zu einem Umsatz von etwa 95 % des eingesetzten TFE zudosiert. Der Druck wird durch kontinuierliche Nachführung von TFE konstant gehalten, ebenso die Reaktionstemperatur. Nach Umsatz der gewünschten Menge wird die TFE-Zufuhr beendet, der Kessel entspannt und Restmonomere durch zweimalige, abwechselnde Evakuierung und Stickstoffspülung weitgehend entfernt. Der Kesselinhalt wird auf Raumtemperatur abgekühlt und über ein Sieb abgepumpt.

Das Rohpolymerisat wird zweimal mit etwa 100 l deionisiertem Wasser gewaschen.

Das gewaschene Rohpolymerisat wird auf einem Wirbelbett bei Temperaturen bis 130 °C vorgetrocknet. Eine Nachtrocknung bei 220 °C über 4 Stunden schließt sich an. Das trockene Rohpolymerisat wird dann in einer Luftstrahlmühle auf einen $d_{50}$-Wert von etwa 20 μm gemahlen, wobei der Anteil über 33 μm 5 Gew.-% nicht überschreitet. Das feingemahlene Produkt wird wie vorstehend beschrieben zu einem zylindrischen Block verpreßt, gesintert und eine Folie abgeschält.

In der Tabelle bedeuten:

APS:       Ammoniumpersulfat
AmCarb:   Ammoniumcarbonat
KPS:       Kaliumpersulfat
$Na_2Ox$:   Dinatriumoxalat
$K_2Ox$:    Dikaliumoxalat

Tabelle

| Beispiel | Temperatur °C | PPVE Vorlage in g | Zudosierrate g PPVE/kg TFE | Initiator Menge/Art | Puffersubstanz Menge/Art | PPVE Einbau Gew.-% | SSG-Dichte $g/cm^3$ | Reißfestigkeit $N/mm^2$ | Reißdehnung % | Braune Schlieren Beurteilung |
|---|---|---|---|---|---|---|---|---|---|---|
| 1 | 70 | 35 | 1,7 | 5,0 g/APS | 20 g/AmCarb | 0,087 | 2,171 | 37,7 | 680 | 1 |
| 2 | 70 | 35 | 1,7 | 5,0 g/APS | 20 g/AmCarb | 0,090 | 2,170 | 37,5 | 690 | 1 |
| 3 | 70 | 35 | 1,7 | 5,0 g/APS | 10 g/AmCarb | 0,094 | 2,171 | 35,6 | 675 | 2 |
| 4 | 70 | 70 | 0,6 | 5,0 g/APS | 20 g/AmCarb | 0,096 | 2,170 | 36,1 | 655 | 2 |
| 5 | 70 | 70 | 0,6 | 4,0 g/APS | 20 g/AmCarb | 0,098 | 2,171 | 36,8 | 715 | 2 |
| 6 | 70 | 60 | 0,7 | 4,0 g/APS | 20 g/AmCarb | 0,102 | 2,169 | 34,8 | 695 | 0 |
| 7 | 63 | 35 | 1,7 | 8,0 g/APS | 40 g/AmCarb | 0,100 | 2,169 | 34,5 | 715 | 3 |
| 8 | 63 | 35 | 1,7 | 8,0 g/APS | 40 g/AmCarb | 0,095 | 2,169 | 36,7 | 705 | 1 |
| 9 | 63 | 70 | 0,6 | 10,0 g/APS | 50 g/AmCarb | 0,115 | 2,168 | 37,9 | 680 | 2 |
| 10 | 63 | 70 | 0,6 | 10,0 g/APS | 50 g/AmCarb | 0,120 | 2,170 | 33,1 | 710 | 2 |
| 11 | 70 | 35 | 1,7 | 4,5 g/KPS | 3,5 g/$Na_2Ox$ | 0,092 | 2,170 | 32,8 | 705 | 0 |
| 12 | 70 | 35 | 1,7 | 4,5 g/KPS | 3,5 g/$Na_2Ox$ | 0,089 | 2,171 | 33,1 | 710 | 0 |
| 13 | 70 | 35 | 1,7 | 4,5 g/KPS | 7,5 g/$K_2Ox$ | 0,093 | 2,172 | 36,4 | 715 | 0 |
| 14 | 70 | 70 | 0,6 | 5,5 g/KPS | 9,0 g/$K_2Ox$ | 0,098 | 2,173 | 36,6 | 690 | 0 |
| 15 | 70 | 70 | 0,6 | 5,5 g/KPS | 9,0 g/$K_2Ox$ | 0,108 | 2,172 | 33,8 | 715 | 0 |
| 16 | 63 | 60 | 0,7 | 9,0 g/KPS | 7,5 g/$Na_2Ox$ | 0,113 | 2,171 | 35,4 | 720 | 0 |
| 17 | 63 | 35 | 1,7 | 9,0 g/KPS | 7,5 g/$Na_2Ox$ | 0,093 | 2,169 | 37,3 | 665 | 0 |
| 18 | 63 | 70 | 0,6 | 9,0 g/KPS | 9,0 g/$K_2Ox$ | 0,120 | 2,164 | 34,5 | 690 | 0 |
| 19 | 63 | 70 | 0,6 | 9,0 g/KPS | 9,0 g/$K_2Ox$ | 0,107 | 2,171 | 34,8 | 700 | 0 |

**Patentansprüche**

1.  Verfahren zur Herstellung von Polymeren des Tetrafluorethylens mit einem Gehalt von 0,01 bis 1 Gew.-% Perfluoralkylvinylether-Einheiten mit 1 bis 4 C-Atomen in der Perfluoralkylkette, dadurch gekennzeichnet, daß die Monomeren nach dem Suspensionsverfahren im wäßrigen Medium umgesetzt werden, wobei Initiatoren und Polymerisationshilfsstoffe im wesentlichen nicht in Form von Ammoniumsalzen und die Initiatoren als Erdalkali- oder Alkalipersulfate eingesetzt werden.

2.  Verfahren nach Anspruch 1, dadurch gekennzeichnet, daß als Initiatoren Alkalipersulfate eingesetzt werden.

3.  Verfahren nach Anspruch 1 oder 2, dadurch gekennzeichnet, daß die Polymerisation bei 60 bis 80 °C erfolgt.

4.  Verfahren nach einem oder mehreren der vorhergehenden Ansprüche, dadurch gekennzeichnet, daß das Tetrafluorethylen unter einem Druck von etwa 5 bis etwa 15 bar eindosiert wird.

5.  Verwendung des nach den Ansprüchen 1 bis 4 erhaltenen Polytetrafluorethylens zur Herstellung eines Formpulvers für die Vorform-Sintertechnik.

**Claims**

1.  A process for the preparation of a polymer of tetrafluoroethylene having a content of 0.01 to 1% by weight of perfluoro-(alkyl vinyl) ether units with 1 to 4 carbon atoms in the perfluoroalkyl chain, which comprises reacting the monomers by the suspension process in an aqueous medium, initiators and polymerization auxiliaries essentially not being employed in the form of ammonium salts and the initiators being employed as alkaline earth metal or alkali metal persulfates.

2.  The process as claimed in claim 1, wherein alkali metal persulfates are employed as initiators.

3.  The process as claimed in claim 1 or 2, wherein the polymerization is carried out at 60 to 80°C.

4.  The process as claimed in one or more of the preceding claims, wherein the tetrafluoroethylene is metered in under a pressure of about 5 to about 15 bar.

5.  The use of the polytetrafluoroethylene obtained as claimed in claim 1 to 4 for the preparation of a molding powder for the preform sintering technique.

**Revendications**

1.  Procédé pour la préparation de polymères du tétrafluoréthylène ayant une teneur de 0,01 à 1 % en poids en motifs éther perfluoralkylvinylique avec 1 à 4 atomes de carbone dans la chaîne perfluoralkylique, caractérisé en ce que l'on fait réagir le monomère selon un procédé en suspension en milieu aqueux, n'ajoutant pas les amorceurs et les adjuvants de polymérisation essentiellement sous forme de sels d'ammonium et en utilisant les amorceurs sous forme de persulfates de métaux alcalins ou de métaux alcalino-terreux.

2.  Procédé selon la revendication 1, caractérisé en ce que l'on utilise en tant qu'amorceurs des persulfates de métaux alcalins.

3.  Procédé selon la revendication 1 ou 2, caractérisé en ce que l'on effectue la polymérisation à 60 à 80 °C.

4.  Procédé selon une ou plusieurs des revendications précédentes, caractérisé en ce que l'on ajoute le tétrafluoréthylène sous une pression d'environ 5 à environ 15 bars.

5.  Utilisation du polytétrafluoréthylène obtenu selon les revendications 1 à 4, pour la préparation d'une poudre de moulage pour la technique de frittage de préformés.